# EUROPÄISCHE PATENTSCHRIFT

(11) **EP 0 538 572 B1**
(45) Veröffentlichungstag und Bekanntmachung des Hinweises auf die Patenterteilung: **05.04.1995**
(21) Anmeldenummer: 92113799.8
(22) Anmeldetag: 13.08.1992
(51) Int. Cl.: C08F 2/30

(54) **Verfahren zur Herstellung von schutzkolloidstabilisierten, emulgatorfreien, wässrigen Kunststoffdispersionen**
Process for preparing aqueous dispersions of synthetic materials without emulsifying agents stabilised with a protective colloid
Procédé de préparation de dispersions aqueuses de matières synthétiques sans émulsifiant stabilisés par un colloide protecteur

(30) Priorität: 19.10.1991 DE 4134671
(43) Veröffentlichungstag der Anmeldung: 28.04.1993
(73) Patentinhaber: HÜLS AKTIENGESELLSCHAFT, 45764 Marl (DE)
(72) Erfinder: Hesterwerth, Dieter, Dr., W-4421 Reken (DE); Sauer, Thomas, Dr., W-4358 Haltern (DE)

(56) Entgegenhaltungen:
- EP-A- 0 129 720
- FR-A- 1 250 727
- US-A- 4 075 411

## Beschreibung

Verfahren zur Herstellung von schutzkolloidstabilisierten, emulgatorfreien, wäßrigen Kunststoffdispersionen, welche auch als sterisch stabilisierte Dispersionen (sterically stabilised dispersions) bezeichnet werden, sind seit langem bekannt.

So ist ein Verfahren zur Herstellung von stabilen Kunststoffdispersionen aus 50 Massen-% Vinylacetat und 50 Massen-% (Meth)acrylat, bezogen auf die gesamten Monomeren, durch semikontinuierliche Polymerisation der Monomeren in wäßriger Phase als Dispersionsmedium in Gegenwart eines wasserlöslichen Schutzkolloids (steric stabiliser) und eines radikalischen Initiators oder eines aus einem radikalischen Initiator und einem wasserlöslichen Reduktionsmittel bestehenden Initiatorsystems bekannt. Die Polymerisation wird in Monomerzulauffahrweise durchgeführt, wobei die gesamte Schutzkolloidmenge in die Vorlage gegeben wird. Als Schutzkolloid sind Polyvinylalkohol und Hydroxyethylcellulose geeignet. Schwierigkeiten gibt es bei der Herstellung von Kunststoffdispersionen aus < 50 Massen-% Vinylacetat und > 50 Massen-% (Meth)acrylat, da die Viskosität während der Polymerisation extrem ansteigt (US-PS 4 670 505, Spalte 1).

In der GB-PS 1 278 813 wird dieses Problem dadurch gelöst, daß zusätzlich zum Schutzkolloid bis zu 10, vorzugsweise bis zu 5 Massen-%, bezogen auf die gesamten Monomeren, eines stabilisierenden Hilfsmittels (emulsion stabiliser), wie Allylalkohol, Propanol oder Propylenglykol, eingesetzt wird. Durch diese Hilfsmittel können die anwendungstechnischen Eigenschaften, wie beispielsweise die Filmbildung der Dispersion, negativ beeinflußt werden. Der Allylalkohol ist darüberhinaus toxisch.

In der US-PS 4 670 505 wird das eingangs geschilderte Problem dadurch gelöst, daß zusätzlich zum Schutzkolloid bis zu 5 Massen-%, bezogen auf die gesamten Monomeren, einer niedermolekularen, wasserlöslichen Aminoalkoholverbindung eingesetzt wird. Diese wirkt als Radikalüberträger bei der Pfropfung der Monomeren auf das Schutzkolloid (chain transfer agent) und somit als Viskositätsregler. Die Aminoalkoholverbindung ist entweder oberflächenaktiv und wirkt dann wie ein Emulgator oder sie ist nicht oberflächenaktiv. In diesem Fall wird zusätzlich ein Emulgator eingesetzt. Emulgatoren sind bei vielen Anwendungen unerwünscht, da sie beispielsweise die Filmbildung negativ beeinflussen.

In der EP-PS 0 013 478 (siehe Patentanspruch 10 und Beispiele 21 bis 23) wird das eingangs geschilderte Problem dadurch gelöst, daß zusätzlich zum Schutzkolloid 30 bis 70 Massen-%, bezogen auf die wäßrige Phase, eines mit Wasser mischbaren, organischen Lösemittels, wie Methanol oder Ethanol, eingesetzt wird. Das Schutzkolloid wird beispielsweise durch Pfropfung von im wesentlichen nicht wasserlöslichen, radikalisch polymerisierbaren" ethylenisch ungesättigten Monomeren, wie Methylmethacrylat und 2-Ethylhexylacrylat, auf Polyethylenoxid (Polyethylenglykol) in Gegenwart eines radikalischen Initiators in einer Vorstufe zur Polymerisation in situ gebildet. Das Wasser/Lösemittel-Gemisch soll die zu polymerisierenden Monomeren lösen. Das Lösemittel ist nach der Polymerisation destillativ abzutrennen.

Die Aufgabe der Erfindung besteht darin, ein Verfahren zur Herstellung von schutzkolloidstabilisierten, emulgatorfreien, wäßrigen Kunststoffdispersionen bereitzustellen, welches die Nachteile des geschilderten Standes der Technik überwindet. Das Verfahren soll es ermöglichen, die Viskosität und den Restmonomergehalt der Dispersionen gezielt einzustellen.

Die Aufgabe wurde in überraschender Weise wie in den Patentansprüchen angegeben gelöst.

Der Gegenstand der Erfindung ist somit ein Verfahren zur Herstellung von schutzkolloidstabilisierten, emulgatorfreien, wäßrigen Kunststoffdispersionen auf Basis von > 50 Massen-% Styrol und/oder (C₁- bis C₈-Alkyl)(meth)acrylat, bezogen auf die gesamten Monomeren, durch semikontinuierliche Polymerisation der Monomeren in wäßriger Phase als Dispersionsmedium in Gegenwart eines Schutzkolloids und eines radikalischen Initiators oder eines aus einem radikalischen Initiator und einem wasserlöslichen Reduktionsmittel bestehenden Initiatorsystems. Der wäßrigen Phase wird kein mit Wasser mischbares, organisches Lösemittel zugesetzt. Als Schutzkolloid wird ein modifiziertes Polyethylenoxid eingesetzt, das durch Behandlung eines Polyethylenoxids mit wasserlöslichen, radikalisch polymerisierbaren, ethylenisch ungesättigten Monomeren erhalten ist. Das zur Behandlung eingesetzte Polyethylenoxid weist ein durch Endgruppenanalyse bestimmtes, zahlenmittleres Molekulargewicht (Mn) zwischen 150 und 25 000 auf. Die Behandlung erfolgt in Gegenwart eines wasserlöslichen, radikalischen Initiators bei 40 bis 95, vorzugsweise 60 bis 90 ° C (Patentanspruch 1). Die Menge des zur Behandlung eingesetzten Polyethylenoxids beträgt in der Regel 1 bis 20, vorzugsweise 3 bis 12 Massen-%, bezogen auf die gesamten Monomeren.

Das modifizierte Polyethylenoxid wird vorzugsweise in einer Vorstufe zur Polymerisation in situ gebildet und die anschließende Polymerisation in Monomerzulauffahrweise durchgeführt (Patentanspruch 2).

Das modifizierte Polyethylenoxid wird vorzugsweise durch Behandlung eines Polyethylenoxids mit (Meth)acrylamid erhalten (Patentanspruch 3).

Weitere Monomere, die bei der Herstellung der Kunststoffdispersionen eingesetzt werden können, sind Vinylester, wie beispielsweise Vinylacetat, Vinylpropionat und die Vinylester handelsüblicher, a-verzweigter (tertiärer) C^{g}/C₁₀-Carbonsäuren, acyclische, konjugierte Diolefine, wie beispielsweise 1,3-Butadien und Isopren, a, ß-monoethylenisch ungesättigte Carbonsäuren, wie beispielsweise (Meth)-acrylsäure, Maleinsäure, Fumarsäure und Itaconsäure und deren Amide, wie beispielsweise (Meth)-acrylamid sowie die Mono- und Diester der Dicarbonsäuren, wie beispielsweise Maleinsäuremono-und Maleinsäuredi-n-butylester.

Die konjugierten Diolefine werden in der Regel in einer Menge von < 45, vorzugsweise 40 Massen-%, bezogen auf die gesamten Monomeren, eingesetzt. Die a, ß-monoethylenisch ungesättigten Carbonsäuren und deren Amide sowie die Mono-und Diester der Dicarbonsäuren werden in der Regel in einer Menge von < 10, vorzugsweise < 5 Massen-%, bezogen auf die gesamten Monomeren, eingesetzt.

Das Monomer/Wasser-Verhältnis wird in der Regel so eingestellt, daß ein Feststoffgehalt der fertigen Dispersion von 30 bis 70 Massen-% resultiert.

Die radikalischen Initiatoren sind entweder wasserlöslich oder im wesentlichen nicht wasserlöslich und dann monomerlöslich.

Geeignete wasserlösliche Initiatoren sind Natrium, Kalium- und Ammoniumperoxodisulfat, Wasserstoffperoxid und wasserlösliche Azoverbindungen, wie beispielsweise 2,2'-Azobis(2-amidinopro- pan)dihydrochlorid. Bevorzugt ist Peroxodisulfat.

Geeignete monomerlösliche Initiatoren sind organische Hydroperoxide, wie beispielsweise Tertiärbutylhydroperoxid, Pinanhydroperoxid, p-Menthanhydroperoxid, Cumolhydroperoxid und Diisopropylphenylhydroperoxid, organische Peroxide, wie beispielsweise Dibenzoylperoxid, Dilaurylperoxid und Diacetylperoxid und monomerlösliche Azoverbindungen, wie beispielsweise Azoisobutyronitril. Bevorzugt ist Tertiärbutylhydroperoxid.

Die Initiatoren oder Initiatorkombinationen werden in der Regel in einer Menge von 0,01 bis 2 Massen-%, bezogen auf die gesamten Monomeren, eingesetzt.

Die wasserlöslichen Reduktionsmittel wirken als Aktivatoren für die Initiatoren. Geeignete Reduktionsmittel sind Ascorbinsäure, Natrium-, Kalium-und Ammoniumsulfit und -bisulfit und Natriumformaldehydsulfoxylat. Sie können in Kombination mit einem Schwermetallsalz eingesetzt werden.

Die Reduktionsmittel werden in der Regel in einer Menge von 0,01 bis 2 Massen-%, bezogen auf die gesamten Monomeren, eingesetzt. Sie werden in der Regel während der Polymerisation dosiert.

Ein weiterer Gegenstand der Erfindung ist ein Verfahren mit den Merkmalen eines der oben diskutierten Patentansprüche 1 bis 3 und dem zusätzlichen Merkmal, daß die Polymerisation zusätzlich in Gegenwart eines wasserlöslichen Viskositätsreglers durchgeführt wird (Patentanspruch 4).

Geeignete Viskositätsregler sind niedermolekulare, organische Schwefelverbindungen, wie beispielsweise Thioglykolsäure, und niedermolekulare, nicht oberflächenaktive Aminoalkoholverbindungen, wie beispielsweise Triethanolamin. Bevorzugt ist Triethanolamin (Patentanspruch 5).

Der Viskositätsregler wird in der Regel in einer Menge von 0,01 bis 2 Massen-%, bezogen auf die gesamten Monomeren, eingesetzt. Er kann teilweise oder vollständig in die Vorlage gegeben werden.

Die Polymerisation wird in der Regel bei 40 bis 95, vorzugsweise bei 60 bis 90 _{°} C durchgeführt.

Die Polymerisation kann in Monomerzulauffahrweise durchgeführt werden. Dabei kann zunächst ein Teil des Monomerengemisches in die Vorlage gegeben und in Batchfahrweise unter Erzeugung eines Saatlatex polymerisiert werden. Anschließend erfolgt dann die Polymerisation in Monomerzulauffahrweise.

Eine bevorzugte Ausführungsform des Verfahrens besteht darin, daß die Polymerisation in Gegenwart eines Peroxodisulfats und eines Viskositätsreglers durchgeführt wird (Patentanspruch 6). Das Peroxodisulfat kann vorgelegt oder während der Polymerisation dosiert werden.

Eine besonders bevorzugte Ausführungsform des Verfahrens besteht darin, daß die Polymerisation in Gegenwart eines aus einem monomerlöslichen radikalischen Initiator, eines Peroxodisulfat und einem Reduktionsmittel bestehenden Initiatorsystems durchgeführt wird (Patentanspruch 7). Der monomerlösliche, radikalische Initiator wird in der Regel vorgelegt. Im Hinblick auf einen sehr niedrigen Restmonomergehalt der Dispersion werden die Initiator/Reduktionsmittel-Mengen hoch, die Polymerisationstemperatur niedrig (beispielsweise auf 85 _{°}C) und die Polymerisationszeit hoch (beispielsweise 7 h Polymerisation + 1 h Nachpolymerisation) eingestellt.

Die Dispersionen der Erfindung eignen sich als Bindemittel in Dispersionsfarben und in hydraulisch abbindenden Mörteln.

Die Erfindung wird durch die folgenden Beispiele erläutert. Darin bedeuten Teile (T.) Massenteile und Prozent (%) Massenprozent.

Polyethylenglykol 1 000 bedeutet beispielsweise ein Polyethylenoxid mit dem zahlenmittleren Molekulargewicht (Mn) 1 000.

Die eingesetzten Monomere waren Styrol, n-Butylacrylat (BA) und Acrylamid.

Die Viskosität der fertigen Dispersionen wurde mit einem Brookfield-Viskosimeter (Spindel 3, 30 Upm = 30 min^{―1}) bei Raumtemperatur gemessen.

### Herstellung der Dispersionen (Beispiele 1 bis 5 und 6 bis 10)

### Beispiel 1

In einem mit Dosiereinrichtungen und Temperaturregelung ausgerüsteten Polymerisationsreaktor wurden 80 T. Wasser, 2,0 T. Acrylamid und 5,0 T. Polyethylenglykol 1 000 vorgelegt. Bei 85 _{°} C wurden 0,1 T. Natriumperoxodisulfat in einer Portion zugegeben und nach 10 min ein Gemisch aus 40 T. Styrol und 60 T. BA in 3 h und eine Lösung von 0,9 T. Natriumperoxodisulfat in 20 T. Wasser in 4 h dosiert (Polymerisationszeit). Nach einer Nachpolymerisationszeit von 0,5 h wurde eine Dispersion mit einem Feststoffgehalt von 54,5 %, einem pH-Wert von 2,3 und einer Viskosität von 1 940 mPa s erhalten.

### Beispiel 2

Das Beispiel 1 wurde wiederholt, jedoch wurden die Menge des Polyethylenglykol 1000 auf 7,0 T. erhöht und zusätzlich 0,7 T. Natriumhydrogencarbonat in die Vorlage gegeben. Die erhaltene Dispersion hatte einen Feststoffgehalt von 51,5 %, einen pH-Wert von 5,8 und eine Viskosität Von 2 300 mPa s.

Das Beispielpaar 1 - 2 zeigt den Einfluß der Polyethylenoxidmenge auf die Viskosität der Dispersion.

### Beispiel 3

Das Beispiel 1 wurde wiederholt, jedoch wurden statt 5,0 T. Polyethylenglykol 1000 5,0 T. Polyethylenglykol 2000 eingesetzt und zusätzlich 0,5 T. Triethanolamin in die Vorlage gegeben. Die erhaltene Dispersion hatte einen Feststoffgehalt von 52,7 %, einen pH-Wert von 2,9 und eine Viskosität von 3 000 mPa s.

### Beispiel 4

Das Beispiel 1 wurde wiederholt, jedoch wurden statt 5,0 T. Polyethylenglykol 1000 2,0 T. Polyethylenglykol 600 eingesetzt und die Polymerisationstemperatur auf 80 _{°} C erniedrigt. Die erhaltene Dispersion hatte einen Feststoffgehalt von 49,3 %, einen pH-Wert von 2,6 und eine Viskosität von 1 560 mPa s.

### Beispiel 5

Das Beispiel 4 wurde wiederholt, jedoch wurde die Polymerisationstemperatur auf 90 _{°} C erhöht. Die erhaltene Dispersion hatte einen Feststoffgehalt von 49,3 %, einen pH-Wert von 2,2 und eine Viskosität von 3 100 mPa s.

Das Beispielpaar 4 - 5 zeigt den Einfluß der Polymerisationstemperatur auf die Viskosität der Dispersion.

### Beispiel 6

Im Polymerisationsreaktor wurden 80 T. Wasser, 2,0 T. Acrylamid, 0,8 T. Tertiärbutylhydroperoxid, 0,1 T. Natriumhydrogencarbonat und 5,0 T. Polyethylenglykol 6000 vorgelegt. Bei 85 _{°} C wurden 0,1 T. Natriumperoxodisulfat in einer Portion zugegeben und nach 5 min ein Gemisch aus 40 T. Styrol und 60 T. BA in 3 h und eine Lösung von 0,3 T. Natriumformaldehydsulfoxylat in 20 T. Wasser in 6 h dosiert (Polymerisationszeit). Nach einer Nachpolymerisationszeit von 1 h wurde eine Dispersion mit einem Feststoffgehalt von 50,9 %, einem pH-Wert von 4,2 und einer Viskosität von 1400 mPa s erhalten.

### Beispiel 7

Im Polymerisationsreaktor wurden 80 T. Wasser, 2,0 T. Acrylamid, 0,8 T. Tertiärbutylhydroperoxid und 5,0 T. Polyethylenglykol 2000 vorgelegt. Bei 85 _{°} C wurden 0,05 T. Natriumperoxodisulfat in einer Portion zugegeben und nach 5 min ein Gemisch aus 40 T. Styrol und 60 T. BA in 3 h und eine Lösung von 0,4 T. Natriumformaldehydsulfoxylat in 20 T. Wasser in 6 h dosiert. Nach einer Nachpolymerisationszeit von 1 h wurde eine Dispersion mit einem Feststoffgehalt von 48,8 %, einem pH-Wert von 4,2 und einer Viskosität von 3460 mPa s erhalten.

### Beispiel 8

Das Beispiel 7 wurde wiederholt, jedoch wurde die Dosierzeit der Monomeren auf 2,5 h verkürzt. Die erhaltene Dispersion hatte einen Feststoffgehalt von 49,3 %, einen pH-Wert von 4,4 und eine Viskosität von 2 640 mPa s.

Das Beispielpaar 7 - 8 zeigt den Einfluß der Dosierzeit der Monomeren auf die Viskosität der Dispersion.

### Beispiel 9

Im Polymerisationsreaktor wurden 85 T. Wasser, 2,0 T. Acrylamid, 0,8 T. Tertiärbutylhydroperoxid, 0,1 T. Natriumperoxodisulfat, 0,1 T. Natriumhydrogencarbonat und 5,0 T. Polyethylenglykol 6000 vorgelegt. Der Reaktorinhalt wurde innerhalb von 0,5 h auf 85 _{°}C aufgeheizt. Dann wurden ein Gemisch aus 40 T. Styrol und 60 T. BA in 3 h und eine Lösung von 0,3 T. Natriumformaldehydsulfoxylat in 15 T. Wasser in 6 h dosiert (Polymerisationszeit). Nach einer Nachpolymerisationszeit von 1 h wurde eine Dispersion mit einem Feststoffgehalt von 51,9 %, einem pH-Wert von 6,4, einer Viskosität von 1640 mPa s und einem Restmonomergehalt von 965 ppm erhalten.

### Beispiel 10

Das Beispiel 9 wurde wiederholt, jedoch wurden die Natriumformaldehydsulfoxylatmenge auf 0,6 T. erhöht (gelöst in 30 T. Wasser; entsprechend wurde die vorgelegte Wassermenge auf 70 T. erniedrigt) und die Polymerisationszeit auf 7 h erhöht. Die erhaltene Dispersion hatte einen Feststoffgehalt von 51,6 %, einen pH-Wert von 5,6, eine Viskosität von 1 400 mPa s und einen Restmonomergehalt von 146 ppm.

Das Beispielpaar 9 - 10 zeigt, dar mit hohen Initiator/Reduktionsmittel-Mengen, niedriger Polymerisationstemperatur und hoher Polymerisationszeit Dispersionen mit sehr niedrigem Restmonomergehalt erhalten werden können.

## Patentansprüche

1. Verfahren zur Herstellung von schutzkolloidstabilisierten, emulgatorfreien, wäßrigen Kunststoffdispersionen auf Basis von > 50 Massen- % Styrol und/oder (Cᵢ- bis C₈-Alkyl)(meth)-acrylat, bezogen auf die gesamten Monomeren, durch semikontinuierliche Polymerisation der Monomeren in wäßriger Phase als Dispersionsmedium in Gegenwart eines Schutzkolloids und eines radikalischen Initiators oder eines aus einem radikalischen Initiator und einem wasserlöslichen Reduktionsmittel bestehenden Initiatorsystems, dadurch gekennzeichnet, daß als Schutzkolloid ein modifiziertes Polyethylenoxid eingesetzt wird, das durch Behandlung eines Polyethylenoxids mit einem zahlenmittleren Molekulargewicht (Mn) zwischen 150 und 25 000 mit wasserlöslichen, radikalisch polymerisierbaren, ethylenisch ungesättigten Monomeren erhalten ist, wobei die Behandlung in Gegenwart eines wasserlöslichen, radikalischen Initiators bei 40 bis 95 _{°} C durchgeführt wird.

2. Verfahren nach Anspruch 1,
dadurch gekennzeichnet, daß das modifizierte Polyethylenoxid in einer Vorstufe zur Polymerisation in situ erhalten wird und die anschließende Polymerisation in Monomerzulauffahrweise durchgeführt wird.

3. Verfahren nach Anspruch 1 oder 2,
dadurch gekennzeichnet, daß das modifizierte Polyethylenoxid durch Behandlung eines Polyethylenoxids mit (Meth)-acrylamid erhalten ist.

4. Verfahren nach einem der Ansprüche 1 bis 3,
dadurch gekennzeichnet, daß die Polymerisation in Gegenwart eines wasserlöslichen Viskositätsreglers durchgeführt wird.

5. Verfahren nach Anspruch 4,
dadurch gekennzeichnet, daß als Viskositätsregler eine niedermolekulare, organische Schwefelverbindung oder eine niedermolekulare, nicht oberflächenaktive Aminoalkoholverbindung eingesetzt wird.

6. Verfahren nach Anspruch 4 oder 5,
dadurch gekennzeichnet, daß die Polymerisation in Gegenwart eines Initiators durchgeführt wird und dieser aus der Gruppe der Peroxodisulfate ausgewählt ist.

7. Verfahren nach einem der Ansprüche 1 bis 3,
dadurch gekennzeichnet, daß die Polymerisation in Gegenwart eines Initiatorsystems durchgeführt wird und dieses aus einem monomerlöslichen, radikalischen Initiator, einem Peroxodisulfat und einem Reduktionsmittel besteht.

8. Verfahren nach Anspruch 7,
dadurch gekennzeichnet, daß der monomerlösliche Initiator aus der Gruppe der (Hydro)peroxide ausgewählt ist.

## Claims

1. Process for the production of protective colloid-stabilised, emulsifier-free aqueous plastics dispersions based on > 50 % by mass styrene and/or (C₁ to C₈ alkyl) (meth)acrylate, relative to the total monomers, by semi-continuous polymerisation of the monomers in aqueous phase as dispersion medium in the presence of a protective colloid and of a radical initiator or of an initiator system consisting of a radical initiator and of a water-soluble reducing agent, characterised in that a modified polyethylene oxide is used as protective colloid, which is obtained by treating a polyethylene oxide with a number average molecular weight (Mn) between 150 and 25 000 with water-soluble, radically polymerisable ethylenically unsaturated monomers, whereby the treatment is carried out in the presence of a water-soluble radical initiator at 40 to 95 _{°} C.

2. Process according to claim 1,
characterised in that the modified polyethylene oxide is obtained in situ in a pre-stage to the polymerisation and the subsequent polymerisation is carried out by the monomer feed procedure.

3. Process according to claim 1 or 2,
characterised in that the modified polyethylene oxide is obtained by treating a polyethylene oxide with (meth)-acrylamide.

4. Process according to one of claims 1 to 3,
characterised in that the polymerisation is carried out in the presence of a water-soluble viscosity regulator.

5. Process according to claim 4,
characterised in that a low molecular weight, organic sulphur compound or a low molecular weight, non-surface active aminoalcohol compound is used as viscosity regulator.

6. Process according to claim 4 or 5,
characterised in that the polymerisation is carried out in the presence of an initiator and this is selected from the group of peroxodisulphates.

7. Process according to one of claims 1 to 3,
characterised in that the polymerisation is carried out in the presence of an initiator system and this consists of a monomer-soluble, radical initiator, a perox- odisulphate and a reducing agent.

8. Process according to claim 7,
characterized in that the monomer-soluble initiator is selected from the group of (hydro)peroxides.

## Revendications

1. Procédé d'obtention de dispersions aqueuses de matière plastique dépourvues d'agent émulsionnant, stabilisées par un colloïde protecteur, à base de >50 % en masse de styrène et/ou de (meth) acrylate d'alcoyle (en Ci à C₈), rapportés aux manomères totaux, par polymérisation demi continue des monomères en phase aqueuse en tant que milieu dispersant, en présence d'un colloïde protecteur et d'un promoteur radicalaire ou d'un système de promoteur formé d'un promoteur radicalaire et d'un agent de réduction soluble dans l'eau, caractérisé en ce que l'on met en oeuvre comme colloïde protecteur un oxyde de polyéthylène modifié, qui est obtenu par traitement d'un oxyde de polyéthylène ayant un poids moléculaire à moyenne numérique (Mn) compris entre 150 et 25 000 avec des monomères non saturés éthyléniquement, polymérisables par voie radicalaire, solubles dans l'eau, dans lequel le traitement est effectué en présence d'un promoteur radicalaire, soluble dans l'eau, à 40 à 95 _{°} C.

## Revendications

2. Procédé selon la revendication 1, caractérisé en ce que l'oxyde de polyéthylène modifié est obtenu dans un stade préliminaire « in situ » par rapport à la polymérisation et que la polymérisation corrélative est effectuée dans un mode de conduite d'amenée du monomère.

3. Procédé selon les revendications 1 ou 2, caractérisé en ce que l'oxyde de polyéthylène modifié est obtenu par traitement d'un oxyde de polyéthylène avec de l'amide (meth) acrylique.

4. Procédé selon l'une quelconque des revendications 1 à 3, caractérisé en ce que la polymérisation est effectuée en présence d'un régulateur de la viscosité soluble dans l'eau.

5. Procédé selon la revendication 4, caractérisé en ce que comme régulateur de viscosité, on met en oeuvre un dérivé soufré organique, à bas poids moléculaire ou un dérivé d'aminoal- cool non tensioactif, à bas poids moléculaire.

6. Procédé selon la revendication 4 ou la revendication 5, caractérisé en ce que la polymérisation est effectuée en présence d'un promoteur et que celui-ci est choisi dans le groupe des peroxodisulfates.

7. Procédé selon l'une des revendications 1 à 3, caractérisé en ce que l'on effectue la polymérisation en présence d'un système de promoteur et que celui-ci se compose d'un promoteur radicalaire, soluble dans le monomère, d'un péroxodisulfate et d'un agent de réduction.

8. Procédé selon la revendication 7, caractérisé en ce que le promoteur soluble dans le monomère est choisi dans le groupe des (hydro)-peroxydes.
